**Europäisches Patentamt**

**European Patent Office**

**Office européen des brevets**

(19)

(11) Numéro de publication: **0 095 959**
**B1**

(12)

# FASCICULE DE BREVET EUROPEEN

(45) Date de publication du fascicule du brevet:
**30.04.86**

(51) Int. Cl.⁴: **H 04 B 7/26**

(21) Numéro de dépôt: **83400986.2**

(22) Date de dépôt: **17.05.83**

(54) Système de radiocommunications, à sauts de fréquence.

(30) Priorité: **27.05.82 FR 8209258**

(43) Date de publication de la demande:
**07.12.83 Bulletin 83/49**

(45) Mention de la délivrance du brevet:
**30.04.86 Bulletin 86/18**

(84) Etats contractants désignés:
**DE GB IT**

(56) Documents cités:
**DE - A - 1 954 754**
**DE - A - 2 603 524**

**IEEE TRANSACTIONS ON VEHICULAR TECHNOLOGY,
vol. VT-27, no. 4, novembre 1978, pages 264-275, IEEE,
New York, USA, G.R. COOPER et al.: "A
spread-spectrum technique for high-capacity mobile
communications"**
**IEE PROCEEDINGS SECTION A-K, vol. 129, no. 3, part F,
juin 1982, pages 213-222, Old Woking, Surrey, GB., P.J.
MUNDAY et al.: "Jaguar-V frequency-hopping radio
system"**

(73) Titulaire: **THOMSON-CSF, 173, Boulevard Haussmann,
F-75379 Paris Cedex 08 (FR)**

(72) Inventeur: **Deman, Pierre, THOMSON-CSF SCPI 173, bld
Haussmann, F-75379 Paris Cedex 08 (FR)**
Inventeur: **Butin, Henri, THOMSON-CSF SCPI 173, bld
Haussmann, F-75379 Paris Cedex 08 (FR)**

(74) Mandataire: **Turlèque, Clotilde et al, THOMSON-CSF
SCPI 19, avenue de Messine, F-75008 Paris (FR)**

## Description

L'invention se rapporte aux réseaux de radiocommunications, c'est-à-dire a tout système de liaison radioélectrique bilatérale, téléphone ou transmission de données, entre deux stations ou plus, et est plus particulièrement applicable aux liaisons radiotéléphoniques entre des abonnés, éventuellement mobiles, et une ou un ensemble de stations maîtres fixes.

Ces réseaux dits"cellulaires" répartissent les stations fixes sur le terrain, chacune d'entre elles ayant la responsabilité de l'établissement des communications avec les mobiles se trouvant dans une zone, appelée cellule, située en son voisinage.

Les réseaux de radiocommunications classiques utilisent des canaux définis par les valeurs de leurs fréquences centrales; l'information est transmise par une modulation analogique à bande étroite, modulation de fréquence, modulation d'amplitude, ou bande latérale unique. Dans les réseaux à grand nombre d'abonnés mobiles, les canaux de fréquence ne sont pas affectés à un groupe de liaisons mais banalisés: ces canaux sont attribués au mobile demandeur en fonction du trafic. Dans un tel système, la gestion des canaux est importante, car l'essentiel de la protection entre les différentes communications est obtenu en affectant à des liaisons géographiquement voisines des fréquences différentes.

Par ailleurs, il est connu de réaliser des réseaux de radiotéléphonie où le canal attribué à une communication change de nombreuses fois au cours d'une même communication. La demande de brevet DE 1954 754 décrit un système de radiotéléphonie comportant plusieurs station communiquant entre elles en transmettant des informations sous la forme de signaux numériques et où un certains nombres de fréquences porteuses discrètes sont affectées aux stations et sont permutées périodiquement, le changement de fréquence étant déterminé par un dispositif programmable propre à chaque station, la synchronisation des changements de fréquence étant effectuée simultanément dans toutes les stations et étant commandée par une horloge propre à chaque station.

Ce système connu met en oeuvre un procédé de transmission à sauts de fréquence dans le seul but de garder secrètes les informations transmises et de rendre difficile un brouillage par un ennemi. Ce procédé consiste à: émettre sur des paliers de fréquence constante pendant des intervalles de temps dont la durée peut atteindre une minute; bloquer l'émetteur de chaque station pendant 20 millisecondes au début et à la fin de cet intervalle de temps, pour tenir compte de la dérive des horloges; et consiste à choisir la fréquence de chaque station, pour chaque palier, de telle façon que deux stations ne puissent jamais émettre sur une meme fréquence au cours d'un même intervalle.

Le développement des demandes de raccordement des abonnés mobiles par radiotéléphone nécessite de nouvelles structures permettant une occupation plus dense du spectre disponible, ou plus précisément, une meilleure efficience spectrale, qui, par référence au téléphone, peut s'évaluer en erlang/hertz/km$^2$.

Une première méthode pour augmenter l'efficience spectrale consiste à réduire la portée entre la station fixe et le mobile, mais on est évidemment limité dans cette voie. C'est l'évolution actuelle des systèmes existants.

L'invention a pour objet un nouveau système de radiocommunications permettant d'obtenir une meilleure efficience spectrale, une grande flexibilité d'installation et d'exploitation, et une diminution du coût de l'infrastructure.

Pour cela, le système de radiocommunications suivant l'invention met en oeuvre une technique de dispersion d'énergie par étalement de spectre, qui malgré le désordre apparent dû à la superposition sans contraintes de signaux provenant des différentes liaisons dans le même continuum espace-temps-fréquence, permet d'obtenir une meilleure efficience spectrale. La technique de dispersion d'énergie retenue dans le nouveau système de radiocommunications suivant l'invention est la technique du saut de fréquence, chaque poste mobile ayant sa propre loi de variation de fréquence, connue des stations fixes, les stations fixes et mobiles étant synchronisées par des moyens simples.

Suivant l'invention, un système de radiocommunications comportant au moins une station maître et un ensemble de stations esclaves, transmettant entre elles des informations numérisées sur des canaux radio à sauts de fréquence suivant une loi temporelle propre à chaque station esclave et commandée par une horloge incorporée à chaque station, est caractérisé en ce que, pour étaler le spectre des canaux radio, la liaison bilatérale entre l'une quelconque des stations esclaves et une station maître est effectuée dans un canal à sauts de fréquence suivant une loi de fréquence associée à cette station esclave et variant par sauts sur des paliers successifs de durée prédéterminée et suffisamment courte pour que le brouillage d'un palier n'altère pas l'intelligibilité de l'information à transmettre; en ce que les lois de fréquence associées aux différentes stations esclaves sont indépendantes mais utilisent un ensemble commun de fréquences; en ce que les paliers d'émission utiles sont synchrones pour l'ensemble du système; et en ce que les stations esclaves sont synchronisées à partir de données reçues des stations maîtres.

L'invention sera mieux comprise et d'autres caractéristiques apparaîtront à l'aide de la description qui suit en référence aux figures annexées:
- La figure 1 est un schéma synoptique d'une liaison station maître-station esclave du système de radiocommunications suivant l'invention.
- La figure 2 est le schéma d'une variante de réalisation de liaison station maître-station esclave du système de radiocommunications suivant l'invention.

Dans certains types de systèmes de radiocommunications, essentiellement pour se protéger des brouillages, les canaux ne sont plus définis par une fréquence centrale ni associés à des modulations à bande étroite. On distingue principalement les systèmes à saut de phase où la modulation à large bande est obtenue sur une fréquence déterminée, et les systèmes rapides, dits à sauts de fréquence, où un paquet d'informations est transmis pendant un temps bref sur une porteuse donnée avec variation de la valeur de cette fréquence porteuse au paquet suivant, en respectant un code convenu. Dans de tels systèmes, des moyens de synchronisation complexes sont mis en oeuvre, au moment de l'établissement des communications, car la brièveté des émissions et l'absence d'infrastructure fixe ne permettent pas une"mise à l'heure" préalable. De plus, le nombre de postes reliés dans un même réseau est généralement limité, et les postes d'un même réseau suivent la même loi de variation de fréquences.

Les problèmes à resoudre dans le cas d'un système de radiocommunication à grand nombre d'abonnés mobiles pouvant être connectés à l'une quelconque des stations fixes d'infrastructure sont complètement différents. Le problème principal est d'augmenter l'efficience spectrale du réseau en limitant à des valeurs acceptables le brouillage susceptible d'intervenir. De plus, le système de synchronisation des différentes stations doit être aussi simple que possible.

Comme indiqué ci-dessus, l'amélioration de l'efficience spectrale dans le nouveau système de radiocommunications suivant l'invention est obtenue en mettant en oeuvre une technique d'étalement du spectre. La technique employée est la transmission à sauts de fréquence, définie cidessus, dans laquelle l'information est transmise par paquets sur des paliers successifs à fréquences différentes. Chaque abonné a sa propre loi de variation de fréquence, les fréquences possibles étant choisies dans un ensemble prédéterminé commun à tous les abonnés, les stations maîtres étant susceptibles de générer les mêmes lois de variation à partir d'informations simples. Les paliers sont séparés par un temps mort limité, pour faciliter le changement de la fréquence et leur durée est grande par rapport au temps mort et aux temps de propagation. Les raisons de ce choix sont les suivantes: Cette technique est celle qui modifie le moins la structure traditionnelle des émetteurs et récepteurs existants. De plus, cette technique n'est pas plus sensible aux chemins multiples que la transmission à fréquence fixe dans la mesure où la durée du palier utile est suffisante. Le temps mort étant relativement faible, le débit de la transmission n'est pratiquement pas augmenté (inférieur à 100 Kbits/s.) on verra plus loin que la synchronisation n'a pas besoin d'être précise, si le temps mort peut être grand devant les variations de temps de propagation entre une station fixe et différents mobiles. Enfin cette technique se prête bien à des traitements non linéaires particulièrement efficaces pour ces types de canaux. Les discontinuités dues aux sauts de fréquence et l'existence du temps mort nécessitent la numérisation de l'information. Pour la transmission de données numériques, cette numérisation est déjà faite; pour la transmission de la parole, l'information est numérisée par un système de codage de la parole.

Par ailleurs, toutes les stations du réseau changent de fréquences aux mêmes instants. Pour cela, toutes les stations sont synchronisées en reference à une heure commune à l'ensemble du système, les stations maîtres se synchronisant directement sur cette heure commune et les stations esclaves se synchronisant à partir de données reçues des stations maîtres.

En conséquence, dans le continuum espace-temps-fréquence, un canal à sauts de fréquence est défini par sa loi de sauts de fréquence propre. Il est possible de définir dans ce continuum un nombre de lois "indépendantes" bien supérieur au nombre des fréquences possibles. Dans ce système, il peut y avoir identité de fréquences pour un palier ou une suite de paliers de canaux différents. Dans ce cas, il y a brouillage "intrinsèque" du plus faible par le plus fort. Les lois à sauts de fréquence sont dites indépendantes lorsque la probabilité conditionnelle du brouillage de n paliers successifs pour une charge de trafic donnée est sensiblement égale à la probabilité de brouillage d'un palier à la puissance n. Ce résultat est obtenu en utilisant une famille de codes pour la génération des lois de fréquence qui possède cette propriété d'indépendance.

Ces types de codes sont connus et décrits par exemple dans les documents suivants:
- DV SARWATTE and M.B. PURSELY "Hopping Patterns for frequency-hopped, Multiple Access Communication "Int.Conf.Commun. ICC 78 TORONTO, CANADA, June 4-7, 1978 p.p. 741/743.
G EINARSSON "Address Assignment for a time-frequency coded spread spectrum system", BSTJ. Vol. 59 n°7, Sept. 1980, p.p. 1241/1255.

Ainsi, le canal reservé à un abonné est défini en permanence quelle que soit sa position, la correspondance entre le numéro d'abonné et la loi de sauts de fréquence correspondante étant biunivoque et cette correspondance pouvant être connue de tous sans inconvenient; la fréquence est complètement déeterminée à chaque saut, à la station esclave (ou abonné) et à la station maître, par la connaissance de l'heure du réseau et du numéro d'identification de l'abonné. De plus, moyennant un brassage simple, il est possible d'assurer qu'en cas de réception malencontreuse d'un canal par un tiers l'information ne sera pas compréhensible.

Ainsi, pour tout le trafic et pour les appels venant de l'infrastructure fixe à destination des mobiles, une matrice complète de lois de sauts de fréquence sans blocage est définie, cette matrice étant saturable seulement en fonction du trafic local.

Ces choix entrainent une simplification considérable des procédures de gestion des réseaux.

Les explications qui suivent montrent schématiquement le gain d'efficience spectrale obtenu dans un tel système par rapport à un système à canaux banalisés à fréquence fixe.

Pour les hypothèses suivantes: deux bandes duplex de 5 MHz chacune, soit N = 200 canaux à 25 KHz d'espacement; l'atténuation de propagation moyenne en fonction de la distance d varie en $l/d^4$ avec une loi de variation log normale d'écart type $\sigma = 10$ dB.

En canaux banalisés avec des cellules hexagonales répétées suivant un motif de 16 hexagones, le brouillage est déterminé par les 6 hexagones où la même fréquence est utilisée, situés à 8 fois le rayon dela cellule; l'atténuation moyenne en $l/d^4$ est de 36 dB par rapport au champ reçu par la station centrale en provenance d'un mobile de sa cellule; si la protection apportée par la modulation nécessaire pour se protéger du brouillage est estimée à 12 dB, (protection nécessaire en modulation analogique), la durée pendant laquelle le champ reçu au mobile conduit à brouillage est donnée toutes les fois que l'atténuation est inférieure à (36-12) = 24 dB, soit une valeur équivalente à $2,4\sigma$: soit 1% du temps; pour l'ensemble des 6 hexagones la durée probable du brouillage est de 6% pour un espace homogene en assimilant la répartition spectrale à une répartition temporelle.

L'efficience spectrale dans un système selon l'art antérieur est déterminée par la dimension du motif qui autorise 200/16 fréquences par cellule, soit 12 fréquences auxquelles correspondent un trafic de 7,2 erlangs avec un taux de perte de 5%, pour 12 émetteurs-récepteurs par cellule.

Dans un système à sauts de fréquence, à accès par code selon l'invention, soit n le nombre de communications en moyenne par cellule et soit N le nombre de canaux distincts.

La probabilité de brouillage intrinsèque au niveau d'un canal peut s'évaluer comme suit:.

$$\frac{n-1}{N} \times (0,3)^2 \times 0,8 \, .$$

Le terme $(0,3)^2$ correspond à l'activité vocale, le terme 0,8 apparaît du fait de la régulation de puissance des mobiles qui permet en cas de conflit d'avoir une capture bénéfique au niveau de la liaison utile dans 20% des cas où le champ reçu est supérieur de 6 dB au brouilleur.

Dans les 6 cellules les plus proches, le trafic étant supposé en première approximation concentré à une distance égale à celle du centre de la cellule située à une distance double de la portée, l'atténuation moyenne en $l/d^4$ est de 12 dB à laquelle correspond une durée de dépassement du champ de référence de 0,6 $\sigma$ soit 0,27 du temps par cellule compte-tenu de la marge de 6 dB nécessaire pour annuler l'effet du conflit de code, d'où la valeur globale de probabilité du brouillage intrinsèque par ces six cellules de

$$\frac{n}{N}$$

$\times (0,3)^2 \times 1,62$ (où $1,62 = 0,27 \times 6$). On a de même pour les 12 cellules distantes de 4 rayons,

$$\frac{n}{N}$$

$\times (0,3)^2 \times 0,43$, et pour les 18 cellules distantes de 6 rayons,

$$\frac{n}{N}$$

$\times (03)^2 \times 0,11.$

Compte-tenu des approximations faites, la probabilité de brouillage intrinsèque converge vers une valeur inférieure à

$$\frac{n}{N}$$

$\times (0,3)^2 \times 3$ pour tenir compte des cellules éloignées. Le brouillage doit rester en moyenne inférieur à 6%.

Par suite de la largeur de bande plus grande nécessaire pour la modulation numérique, le nombre de canaux dans la même bande de fréquences est en pratique inférieur à celui d'un réseau à fréquences fixes banalisées, par exemple divisé par 2; N devient égal à 100 et à la valeur n = 0,22 N correspond 22 communications, ce qui est 1,8 fois supérieur au nombre des communications possibles dans un réseau à canaux banalisés à fréquence fixe, dans une même bande de fréquences.

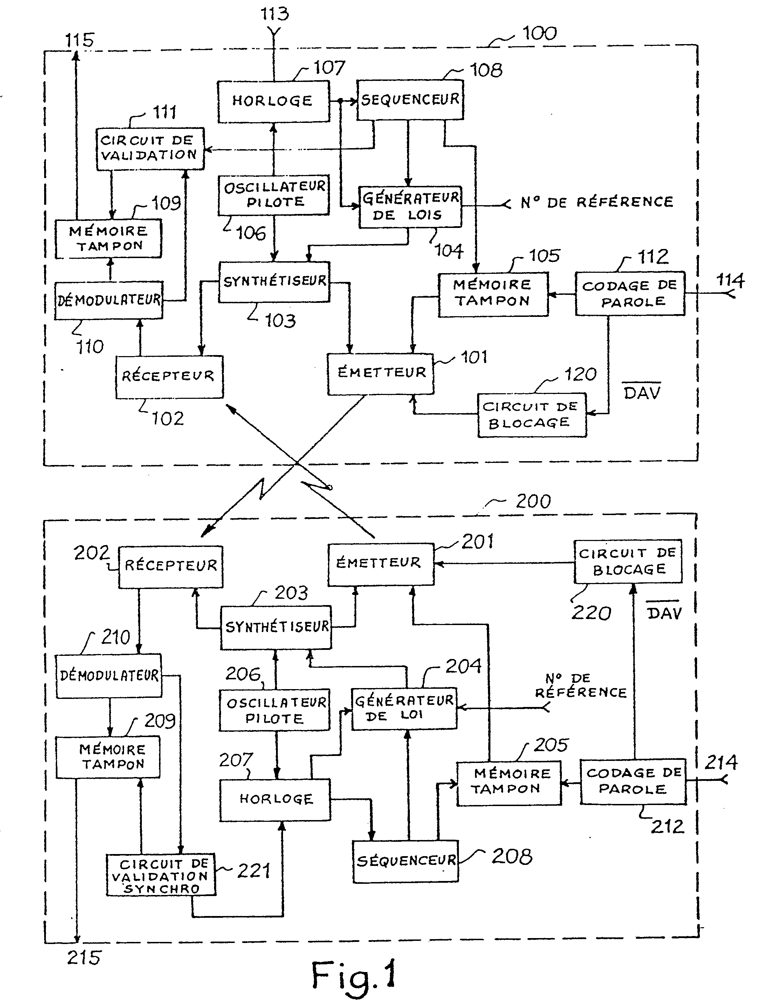

La figure 1 représente une partie d'un tel système de radiocommunications à sauts de fréquence. Sur cette figure ont été representées une partie 100 d'une station fixe, dite maître, et une station esclave 200, qui peut être un abonné mobile. Les éléments identiques dans ces deux stations portent des numéros de dizaine et d'unité identiques précédés du chiffre 1 pour la station maître et du chiffre 2 pour la station esclave.

La station maître comporte un certain nombre de sous-ensembles d'émission-réeception tels que 100 qui comportent chacun un emetteur 101 ayant une entrée de signal de modulation et une entrée de signal porteur, et un récepteur 102 ayant une entrée de signal porteur et une sortie de signal. Un sous-ensemble d'emission-reception comporte en outre un synthétiseur 103 ayant deux sorties respectivement reliées aux entrées de fréquences porteuses de l'émetteur 101 et du récepteur 102. Ce synthétiseur a une entrée de signal pilote reliée à la sortie d'un oscillateur pilote 106, et une entrée de commande de sauts de fréquence reliée à la sortie d'un générateur de lois de sauts de fréquence 104. L'oscillateur pilote, à haute stabilité, alimente également une horloge 107. Celle-ci est constituée par des étages diviseurs et est susceptible d'être remise à l'heure par une entrée de commande de décalage 113, au moyen d'un dispositif extérieur à la station, par exemple à partir des tops transmis par les stations de radiodiffusion. Cette horloge 107 a une sortie reliée à l'entrée de commande d'un séquenceur 108, qui sert à définir périodiquement par référence à l'heure, les instants de début et de fin des périodes d'emission et de silence formant les paliers successifs. La période de silence est mise a profit pour positionner le synthétiseur 103 sur la fréquence du palier suivant et pour amortir dans les matériels les phénomènes transitoires liés aux fronts raides de début et de fin de palier.

La fréquence issue du synthétiseur est définie à chaque palier par le générateur de lois de fréquence 104, qui la déduit du temps défini par le séquenceur 108, et d'un numéro de référence d'identification, ou code, différent pour chacune des liaisons. Il peut y avoir par exemple un numéro d'identification par station esclave, plus un pour un canal sémaphore. De tels générateurs de lois de fréquence sont connus (voir ci-dessus) et peuvent fonctionner suivant des algorithmes plus ou moins complexes.

La station maître a une entrée de signal 114. Pour une station de transmission de radiotéléphone, la station comporte en outre un circuit de codage de parole 112. Ce circuit inclut la fonction de détection d'activité vocale et a une sortie de signal numérisée et une sortie de détection d'activité vocale DĀV reliée à l'entrée d'un circuit 120 de blocage de l'émetteur 101 qui, par l'envoi d'un signal de polarité déterminée sur la sortie reliée à l'emetteur, bloque l'amplification pendant les silences du signal de parole. La sortie du circuit de codage 112, est reliée à l'entrée d'une mémoire tampon "premier entré-premier sorti" 105, qui a par ailleurs une entrée de commande reliée à une seconde sortie du séquenceur 108. Le signal à transmettre arrive sous forme de bits série à l'entrée de la mémoire tampon 105 où il est mémorisé. Sous la commande du séquenceur cette mémoire est vidée à vitesse plus grande pour écouler tous les bits pendant la durée du palier d'émission.

Dans la partie réception, la sortie du récepteur 102 est reliée a l'entrée d'un démodulateur 110. Lors de la réception, chaque palier est démodulé en entier et la recherche de la synchronisation faite dans un palier, par exemple en mémorisant le signal reçu, le démodulateur comportant un dispositif de synchronisation du type décrit dans le brevet français n° 78 18406 publié le 18 janvier 1981 sous le numéro 2 429 525, au nom de la Demanderesse. La sortie du démodulateur est reliée a l'entrée d'une mémoire tampon 109 qui joue le rôle inverse de la mémoire 105 et fournit un débit continu pour les suites de paliers validés. Pour cette validation, la station maître comporte en outre un circuit de validation 111 ayant une entrée reliée à une troisième sortie du séquenceur et une entrée reliée à la sortie du démodulateur; ce circuit vérifie que les paliers successifs reçus correspondent bien à la liaison en cours, par exemple que ces paliers transmettent un signal ou une information caractéristique du canal et proviennent par conséquent de la même station esclave. Les paliers qui ne répondent pas à ce critère de validation sont éliminés et remplacés par un signal d'interpolation, par exemple par une suite alternée de 0 et 1, si la parole est codée en delta. Dans d'autres modes de réalisation, la décision de validation peut être prise à partir de l'analyse des redondances dans l'information transmise. La sortie 115 de la mémoire tampon 109 est donc la sortie signal de la station maître.

La station "esclave" présente un schéma très voisin. Elle comporte un émetteur 201, un récepteur 202 dont les entrées de frequences porteuse sont reliées aux sorties d'un synthétiseur 203. Un générateur de lois de sauts de fréquence 204 commandé par un séquenceur 208 a sa sortie reliée à l'entrée de commande du synthétiseur 203. Le synthétiseur a par ailleurs une entrée de signal pilote reliée à un oscillateur pilote à haute stabilité 206, cet oscillateur ayant par ailleurs une sortie couplée à l'horloge 207. La sortie de l'horloge est reliée à l'entrée du séquenceur 208 qui comporte par ailleurs une seconde sortie reliée à la mémoire tampon 205, l'entrée de signal de cette mémoire tampon étant reliée à l'entrée de signal de la station, 214 par l'intermédiaire d'un circuit de codage de parole 212. La sortie détection d'activité vocale DĀV de ce circuit de codage, est reliée à l'entrée du circuit de blocage 220 dont la sortie commande le blocage de l'émetteur par suppression de la porteuse pendant les silences. Pour la réception, la sortie du récepteur est reliée à l'entrée d'un démodulateur 210 dont la sortie est reliée à l'entrée d'une mémoire tampon 209 dont la sortie est la sortie de signal de la station esclave, 215.

La différence essentielle entre la station maître et une station esclave réside dans la synchronisation. En effet, l'entrée de décalage de l'horloge 207 reçoit un signal de commande issu d'un circuit de validation et de synchronisation 221. Ce circuit de validation et de synchronisation a également une seconde sortie reliée à l'entrée de commande de la mémoire tampon 209. La partie validation de ce circuit fonctionne comme le circuit de validation 111 de la station maître pour la suppression de certains paquets de données dans la mémoire 205, à partir du signal démodule à la sortie du démodulateur 210. Ce circuit de validation et de synchronisation commande de plus la synchronisation de l'horloge 207. Pour cela il mesure l'instant d'arrivée, d'un palier à partir du front de montée de l'impulsion de palier et de la synchronisation bit et corrige l'horloge en la mettant en phase avec le palier reçu pour chaque palier validé. Si l'asservissement est astatique et de rapidité suffisante, les stations esclaves sont décalées par rapport aux stations maîtres d'une durée égale au temps de propagation entre les deux stations, fonction de la position du mobile. Du fait que la station esclave est synchronisée sur les données transmises par la station maître, seule la station maître peut avoir l'initiative de l'appel dans un tel système.

Les modes de transmission peuvent être le duplex fréquentiel, le duplex temporel ou un mode alternat à condition que la durée de transmission dans un sens soit limitée pour permettre l'envoi par la station maître du signal en retour nécessaire au maintien de la synchronisation.

Pour une transmission sur un mode de duplex fréquentiel, la station maître envoie des paquets de données sur des paliers successifs de la loi de fréquence associée à la station esclave appelée. La station esclave reçoit les paquets de données de la station maître, le signal transmis par le synthétiseur 203 au démodulateur 210 suivant cette même loi de sauts de fréquence. La station esclave émet les paquets de données correspondant au sens inverse de transmission sur des paliers de fréquence successifs obtenus à partir de sa loi de sauts de fréquence par décalage d'une valeur de fréquence fixe, avantageusement égale à la fréquence intermédiaire du récepteur. Pour la réception dans la station maître, le même décalage de fréquence est réalisé dans le synthétiseur 103 pour la démodulation par le démodulateur 110. Pour le système de radiocommunications suivant l'invention, ce mode de transmission est le mode préféré.

Pour une transmission sur un mode de duplex temporel, un cycle au rythme de deux paliers est prévu, un premier palier correspondant à un premier sens de transmission et le second à l'autre sens de la transmission, l'émetteur et le récepteur de chacune des stations sont commandés alternativement par le synthétiseur à partir de la loi de fréquences générée par le générateur de lois, 104 ou 204. Un tel mode de transmission nécessite une compression, puis une décompression, qui double le débit numérique transmis sur les paliers utiles. Ce mode est cependant utilisable lorsque ce débit reste inférieur aux valeurs à partir desquelles des problèmes de chemins multiples se posent.

Enfin il bien sûr possible d'utiliser un mode alternat, sur la même fréquence, les circuits 112 et 212 assurant le passage en émission pendant la parole.

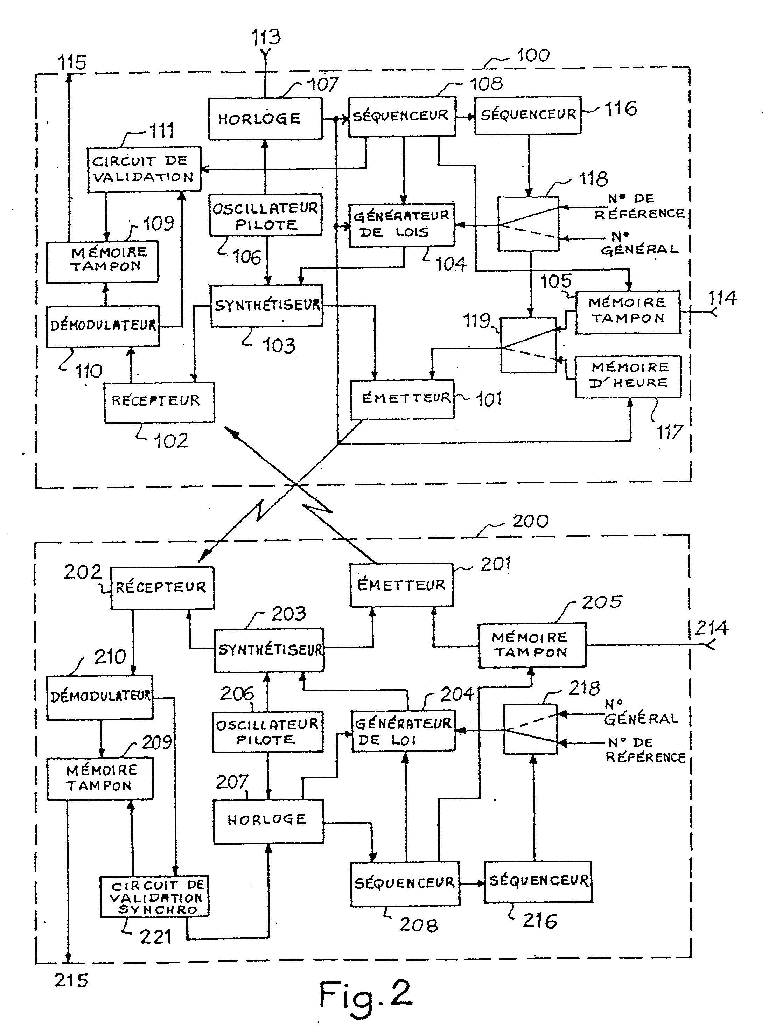

La figure 2 est un mode de réalisation du système de radiocommunications suivant l'invention dans lequel un canal sémaphore est prévu et utilisé pour la synchronisation, l'initiative de l'appel pouvant alors être donnée à la station esclave. Sur cette figure les mêmes éléments que sur la figure 1 ont été désignés par les mêmes références. Cette variante a pour objet de permettre de maintenir l'émission périodique d'un signal de synchronisation à l'ensemble des stations esclaves même dans le cas où une communication a été établie sur un code défini par le numéro d'identification de l'abonné correspondant, dans la station maître. Pour cela, en plus du séquenceur 108, la station maître comporte un second séquenceur 116. De manière analogue, la station esclave comporte en plus du séquenceur 208 un second séquenceur 216. Ces séquenceurs 116 et 216 déterminent la périodicité de passage des stations sur le canal général ou sémaphore, par exemple 1 palier sur 100. Pour ce palier la fréquence est définie non plus par le numero d'identification de l'abonné mais par un numéro général associé au canal sémaphore, ce qui permet à tous les postes esclaves de recevoir un message indiquant l'heure du réseau en clair. Pour cela, la station maître comporte en outre une mémoire, dite mémoire d'heure, 117 dont l'entrée est reliée à la sortie de l'horloge 107. Ainsi, la mémoire 117 est maintenue en permanence à jour par l'horloge maître 107 L'utilisation de l'heure du réseau comme "identifiant" du canal sémaphore présente plusieurs avantages. Le premier est de permettre à une station esclave déjà verrouillée sur la synchronisation d'identifier sans ambiguïté le canal général et de maintenir sa synchronisation en se calant préférentiellement ou exclusivement sur la réception de ces signaux. Le second avantage est de permettre à une station esclave non synchronisée de se verrouiller sur le réseau; il lui suffit pour cela d'écouter suivant une loi définie par un code quelconque, le sien par exemple à condition que la loi de sauts de fréquence du canal général et sa propre loi de sauts de fréquence interfèrent de temps en temps, les intervalles entre deux interférences successives devant être inférieurs à la durée tolérable pour la synchronisation.

Dans la station maître, le générateur de lois de sauts de fréquence 104 reçoit donc le numéro général associé au canal sémaphore ou un numéro d'identification particulier associé à la station appelée, suivant que le séquenceur 116 commande la transmission de l'un ou de l'autre à ce générateur de lois. Le commutateur 118 remplit cette fonction de commutation. De même, l'émetteur 101 reçoit les données à transmettre de la mémoire tampon 105 ou de la mémoire d'heure 117 sur commande du séquenceur 116, un com mutateur 119 remplissant cette fonction de commutation.

Dans la station esclave, le séquenceur 216 commande la transmission au générateur de loi de sauts de fréquence 204 du numéro général du canal sémaphore ou du numéro de référence de cette station suivant la position d'un commutateur 218. Dans ce récepteur, à la première interférence, l'horloge de réception 207 est forcée par le circuit de validation et de synchronisation 221 sur l'heure reçue. Lors du passage suivant des séquenceurs 116 et 216 sur le numéro général, il y a vérification de la presomption de synchronisation. L'absence de vérincation entraine une nouvelle recherche du signal horaire.

L'existence de ce canal sémaphore en duplex permet de plus d'acheminer en permanence vers la station maître les signalisations en provenance d'une station esclave. En particulier, la station esclave peut faire une demande de connexion. Cette demande est obtenue par l'envoi sur un palier de référence du canal sémaphore du seul numéro d'identification de la station esclave demanderesse. La suite éventuelle du dialogue se déroule alors sur le canal défini par le numéro d'identification transmis par la station esclave.

Dans le cas où il existe plusieurs stations maîtres dans le réseau, le dispositif se prête parfaitement à la coordination du trafic entre l'ensemble des stations.

Pour cela, une trame périodique définie par rapport à l'heure commune à l'ensemble des réseaux est définie de la manière suivante: les paliers d'émission de l'heure des différentes stations maîtres définis par chacun des sequenceurs 116 sont décalés dans le temps. Ainsi, toute station maître ayant une communication en cours peut ne pas émettre sur le canal sémaphore, la synchronisation restant assurée par le canal sémaphore commun au moyen des paquets de données, donnant les valeurs de l'heure, émis par les stations maîtres qui ne sont pas en communication. Ainsi les communications d'une station maître n'ont pas à être interrompues. Cette disposition, qui supprime le brouillage intrinsèque correspondant, a de plus l'avantage de permettre à une station esclave qui désire établir une communication de sélectionner la "meilleure" des stations maitres libres en transmettant son appel en synchronisme avec le mot horaire de meilleure qualité par exemple, c'est-à-dire dont le niveau de champ reçu est le plus fort.

A titre d'exemple, les valeurs numériques suivantes associées à un nouveau système de radiocommunications suivant l'invention peuvent être données: la gamme des fréquences peut être de 900 MHz. Le décalage de fréquence entre l'émission et la réception pour une transmission en duplex fréquentiel peut être de 45 MHz. Le nombre des canaux de fréquence affectés au réseau peut être égal à 100, espacés de 50 Khz. La durée du palier d'émission peut être egale à 2 millisecondes, la durée du temps mort étant égale à 1 milliseconde. Pour un débit numérique continu à l'entrée de signal égal à 16 Kbits par seconde, le débit numérique sur le palier d'émission sera 24 Kbits par seconde, le nombre de bits transmis sur un palier d'emission étant donc égal à 48.

Pour la génération des lois de sauts de fréquences, un poste d'abonné, station esclave, n'a pas de difficulté pour garder en mémoire sa propre loi; par contre toute station maître susceptible d'entrer en liaison avec un abonné déterminé doit pouvoir générer immédiatement la loi de sauts de fréquences de cet abonné quel qu'il soit. Il suffit pour cela que toutes les lois soient choisies dans la même famille de code, et d'établir la correspondance univoque entre le numéro de l'abonné et la loi de saut de fréquence de code.

## Revendications

1. Système de radiocommunications comportant au moins une station maître (1) et un ensemble de stations esclaves (2), transmettant entre elles des informations numérisées sur des canaux radio à sauts de fréquence suivant une loi temporelle propre à chaque station esclave (2) et commandée par une horloge incorporée à chaque station (1 et 2), caractérisé en ce que, pour étaler le spectre des canaux radio, la liaison bilatérale entre l'une quelconque des stations esclaves et une station maitre est effectuée dans un canal à sauts de fréquence suivant une loi de fréquence associée à cette station esclave et variant par sauts sur des paliers successifs de durée prédéterminée et suffisamment courte pour que le brouillage d'un palier n'altère pas l'intelligibilité de l'information à transmettre; en ce que, les lois de fréquence associées aux différentes stations esclaves sont indépendantes mais utilisent un ensemble commun de fréquences; en ce que les paliers d'émission utiles sont synchrones pour l'ensemble du système; et en ce que les stations esclaves sont synchronisées à partir de données reçues des stations maîtres.

2. Système selon la revendication 1, caractérisé en ce que la ou les stations maîtres sont synchronisées par un signal horaire extérieur commun à l'ensemble du système.

3. Système selon l'une des revendications 1 et 2, caractérisé en ce que les paliers utiles d'émission sont séparés par des intervalles de temps brefs par rapport a la durée des paliers pour faciliter les sauts de fréquence sans accroître le débit effectif et la sensibilité aux chemins multiples, les stations maîtres et les stations esclaves comportant des moyens (105, 205) pour comprimer à l'émission les données à émettre dans le rapport de l'intervalle entre les débuts de paliers à la durée du palier utile d'émission et des moyens (109, 209) pour décomprimer a la réception les données reçues.

4. Système selon l'une des revendications 1 à 3, caractérisé en ce que dans un canal à saut de fréquence, la transmission est réalisée en duplex fréquentiel, la trannsmission s'effectuant dans un sens suivant la loi de frequence associée a la station esclave correspondante et dans l'autre sens suivant la même loi de fréquences décalée d'une valeur de fréquence fixe.

5. Système selon la revendication 4, caractérisé en ce que la fréquence fixe d'écart entre les deux sens de transmission est égale à la fréquence intermédiaire du récepteur.

6. Système selon l'une des revendications 1 à 3, caractérisé en ce que dans un canal la transmission est réalisée en duplex temporel et s'effectue dans les deux sens de transmission sur la même loi de sauts de fréquence.

7. Système selon l'une des revendications 1 à 3, caractérisé en ce que dans un canal, la transmission est réalisée en alternat automatique entre les deux sens de transmission sur la même loi de sauts de fréquences, le passage en position émission étant commandé par un circuit de détection d'activite.

8. Systeme selon l'une quelconque des revendications précédentes, caractérisé en ce que les paliers ont une durée prédéterminée assez longue vis-à-vis des durées de propagation entre stations pour que la précision de synchronisation n'ait pas à tenir compte du temps.

9. Système selon l'une quelconque des revendications précédentes, caractérisé en ce que la loi de fréquence associée à une station esclave est établie dans une station maître et dans ladite station esclave à partir d'un numéro d'identification associé à cette station esclave et de l'heure d'émission, par un générateur de lois de fréquence (104, 204), l'heure d'émission étant mesurée par rapport au nombre de paliers dans un cycle dont la durée est fonction du nombre de fréquences dans l'ensemble commun des fréquences utilisables.

10. Système selon l'une quelconque des revendications précédentes, caractérisé en ce qu'il comporte en outre un canal sémaphore auquel est associé une loi de saut de fréquence particulière déterminable par l'ensemble des stations et sur lequel chaque station peut être commutée, chaque station comportant à cet effet des moyens de commutation (118, 218), les stations maîtres comportant en outre une mémoire d'heure (117) et des moyens d'émission périodique (116, 119) des données contenues dans cette mémoire sur des paliers d'émission de la loi de fréquence du canal sémaphore.

11. Système selon la revendication 10, caractérisé en ce que les paliers d'emission des différentes stations maîtres du réseau sur la loi de saut de frequence du canal sémaphore sont décalés dans le temps.

12. Système selon l'une des revendications 1 à 11, caractérisé en ce que, pour la transmission d'un signal téléphonique, les porteuses des paliers correspondant aux silences de la parole sont supprimés à l'émission, chaque station comportant à cet effet un circuit de blocage (120,220) de l'émetteur, et en ce que lors de la démodulation un palier détecté brouillé est remplacé par une interpolation entre les bons paliers précédents et suivants.

**Patentansprüche**

1. Funkverbindungssystem mit wenigstens einer Hauptstation (1) und einer Gruppe von Unterstationen (2), die untereinander digitalisierte Informationen auf Funkkanälen übertragen, welche mit Frequenzsprung nach einem Gesetz arbeiten, das jeweils einer Unterstation (2) zugehörig ist, gesteuert durch eine in jede Station (1 und 2) eingebaute Zeitbasis, dadurch gekennzeichnet, daß zur Ausbreitung des Funkkanalspektrums die zweiseitige Verbindung zwischen einer beliebigen Unterstation und einer Hauptstation in einem Frequenzsprung-Kanal nach einem Frequenzgesetz erfolgt, welches dieser Unterstation zugeordnet ist und sprungweise auf aufeinanderfolgenden Stufen vorbestimmter Dauer variiert, die ausreichend groß ist, damit die Störung einer Stufe die Verständlichkeit der zu übertragenden Information nicht beeinträchtigt; daß die Frequenzgesetze, welche den verschiedenen Unterstationen zugeordnet sind, unabhängig voneinander sind, jedoch eine gemeinsame Gruppe von Frequenzen benutzt wird; daß die nutzbaren Sendestufen für die Gesamtheit des Systems synchron sind; und daß die Unterstationen ausgehend von Daten, welche von den Hauptstationen empfangen werden, synchronisiert werden.

2. System nach Anspruch 1, dadurch gekennzeichnet, daß die Hauptstation bzw. Hauptstationen durch ein externes Taktsignal synchronisiert werden, welches der Gesamtheit des Systems gemeinsam ist.

3. System nach Anspruch 1 oder 2, dadurch gekennzeichnet, daß die nutzbaren Sendestufen durch Zeitintervalle getrennt sind, welche kurz im Vergleich zur Dauer der Stufen sind, um die Frequenzsprünge zu erleichtern, ohne den effektiven Durchsatz und die Empfindlichkeit gegenüber Mehrfachwegen zu vergrößern, wobei die Hauptstationen und die Unterstationen Mittel (105, 205) umfassen, um sendeseitig die zu übertragenden Daten im Verhältnis des Intervalls zwischen den Stufenanfängen zur Dauer der nutzbaren Sendestufe zu komprimieren, und Mittel (109, 209) umfassen, um empfangsseitig die empfangenen Daten zu dekomprimieren.

4. System nach einem der Ansprüche 1 bis 3, dadurch gekennzeichnet, daß in einem Frequenzsprungkanal die Übertragung im Duplex-Frequenzbetrieb erfolgt, wobei die Übertragung in einem Sinne gemäß dem Frequenzgesetz erfolgt, welches der entsprechenden Unterstation zugeordnet ist, und im anderen Sinne gemäß demselben Frequenzgesetz erfolgt, welches um den Wert einer festen Frequenz verschoben ist.

5. System nach Anspruch 4, dadurch gekennzeichnet, daß die feste Frequenzdifferenz zwischen den zwei Übertragungsrichtungen gleich der Zwischenfrequenz des Empfängers ist.

6. System nach einem der Ansprüche 1 bis 3, dadurch gekennzeichnet, daß die Übertragung in einem Kanal im Duplex-Zeitbetrieb erfolgt und in beiden Übertragungsrichtungen mit demselben Frequenzsprungsgesetz erfolgt.

7. System nach einem der Ansprüche 1 bis 3, dadurch gekennzeichnet, daß die Übertragung in einem Kanal automatisch zwischen den zwei Übertragungsrichtungen abwechselnd mit demselben Frequenzsprungsgesetz erfolgt, wobei der Übergang in den Sendezustand durch eine Aktivitätsdetektionsschaltung erfolgt.

8. System nach einem der vorstehenden Ansprüche, dadurch gekennzeichnet, daß die Stufen eine vorbestimmte Dauer aufweisen, die verglichen mit den Ausbreitungszeiten zwischen Stationen ausreichend lang ist, damit die Synchronisationsgenauigkeit ohne Berücksichtigung der Zeit erhalten wird.

9. System nach einem der vorstehenden Ansprüche, dadurch gekennzeichnet, daß das Frequenzgesetz, welches einer Unterstation zugeordnet ist, in einer Hauptstation und in der genannten Unterstation ausgehend von einer Identifizierungsnummer erstellt wird, welche dieser Unterstation und der Sendezeit zugeordnet ist, mittels eines Frequenzgesetzgenerators (104, 204), wobei die Sendezeit in bezug zur Anzahl von Stufen in einem Zyklus gemessen wird, dessen Dauer von der Anzahl von Frequenzen in der gemeinsamen Gruppe von verwendbaren Frequenzen abhängt.

10. System nach einem der vorstehenden Ansprüche, dadurch gekennzeichnet, daß es ferner einen Semaphor-Kanal enthält, welchem ein besonderes Frequenzsprungsgesetz zugeordnet ist, das durch die Gesamtheit von Stationen bestimmbar ist und auf welches jede Station geschaltet werden kann, wobei jede Station zu diesem Zweck Schaltmittel (118, 218) umfaßt und die Hauptstationen ferner einen Zeitspeicher (117) und Mittel (116, 119) zum periodischen Aussenden der in diesem Speicher enthaltenen Daten auf Sendestufen des Frequenzgesetzes des Semaphor-Kanals enthalten.

11. System nach Anspruch 10, dadurch gekennzeichnet, daß die Sendestufen der verschiedenen Hauptstationen des Netzwerks im Frequenzsprunggesetz des Semaphor-Kanals zeitlich versetzt sind.

12. System nach einem der Ansprüche 1 bis 11, dadurch gekennzeichnet, daß zur Übertragung eines Telefonsignals die Träger der Stufen, welche den Sprechpausen entsprechen, sendeseitig unterdrückt werden, wobei jede Station zu diesem Zweck eine Schaltung (120, 220) zum Blockieren des Senders umfaßt, und daß beim Demodulieren eine festgestellte gestörte Stufe ersetzt wird durch eine Interpolation zwischen der vorausgehenden und nachfolgenden einwandfreien Stufe.

## Claims

1. Radiocommunications system comprising at least one main station (1) and a set of substations (2) transmitting digitalized information among each other on frequency jumping radio channels in accordance with a time law individually associated with each substation (2), and controlled by a clock incorporated in each station (1 and 2), characterized in that, in order to extend the spectrum of the radio channels, the bilateral connection between any of the substations and a main station is performed in a frequency jumping channel in accordance with a frequency law associated with this substation and varying stepwise on successive steps of predetermined duration sufficiently short to avoid that an interference occurring in one step will affect the intelligibility of the information to be transmitted; in that the frequency laws associated with the different substations are independent but use a common set of frequencies; in that the useful transmission steps are synchronous for the whole system; and in that the substations are synchronized by data received from the main station.

2. System according to claim 1, characterized in that the main station (s) are synchronized by an external clock signal common to the whole system.

3. System according to any of claims 1 and 2, characterized in that the useful transmission steps are separated by time intervals which are short in comparison to the duration of the steps to facilitate the frequency jumps without increasing the effective throughput and the sensitivity to multiple paths, the main station and the substations comprising means (105, 205) for the compression of the data to be transmitted in a ratio of the interval between the beginnings of steps to the duration of the useful transmission step, and means (109, 209) for the decompression of the received data.

4. System according to any one of claims 1 to 3, characterized in that in a frequency jumping channel the transmission is performed in frequency duplex, the transmission in one direction being performed in accordance with the frequency law associated with the corresponding substation and, in the other direction, in accordance with the same frequency law shifted by a frequency of fixed value.

5. System according to claim 4, characterized in that the fixed frequency shift between the two transmission directions is equal to the intermediate frequency of the receiver.

6. System according to any of claims 1 to 3, characterized in that the transmission in a channel is performed in time duplex and occurs in the two directions of transmission in accordance with the same frequency jumping law.

7. System according to any of claims 1 to 3, characterized in that the transmission in a channel is performed with automatic alternation between the two transmission directions on the same frequency jumping law, the transition into the transmission state being controlled by an activity detection circuit.

8. System according to any of the preceding claims, characterized in that the steps have a predetermined duration sufficiently long in comparison to the propagation times between the stations so that the precision of synchronization is obtained without taking care of the time.

9. System according to any of the preceding claims, characterized in that the frequency law associated with a substation is established in a main station and in said substation from an identification number associated with this substation and the time of transmission, by a frequency law generator (104, 204), the transmission time being measured with respect to the number of steps in a cycle the duration of which is a function of the number of frequencies in the common set of usable frequencies.

10. System according to any of the preceding claims, characterized in that it further comprises a semaphore channel whereto a particular frequency jumping law is associated which is susceptible to be determined by the entirety of the stations and whereto each station can be switched, each station comprising appropriate switching means (118, 218), the main stations further comprising a time memory (117) and means (116, 119) for the periodic transmission of the data contained in this memory on transmission steps of the frequency law of the semaphore channel.

11. System according to claim 10, characterized in that the transmission steps of the different main stations of the network in the frequency jumping law of the semaphore channel are shifted in time.

12. System according to any of claims 1 to 11, characterized in that for the transmission of a telephone signal the carriers of steps corresponding to speech silence are suppressed upon transmission, each station comprising a transmitter blocking circuit (120, 220) for this purpose, and in that, upon demodulation, a detected disturbed step is replaced by an interpolation between correct receiving and following steps.

Fig.1

1

Fig.2